# EUROPEAN PATENT APPLICATION

(11) **EP 1 029 992 A2**
(43) Date of publication of application: **23.08.2000**
(21) Application number: 00500021.1
(22) Date of filing: 11.02.2000
(51) Int. Cl.: E03D 9/14

(54) **Water control system for silent filling of toilet cisterns**

(30) Priority: 15.02.1999 ES 9900366
(71) Applicant: Arteagoitia Landa, José Antonio, 48001 Bilbao, Vizcaya (ES)
(72) Inventor: Arteagoitia Landa, José Antonio, 48001 Bilbao, Vizcaya (ES)
(74) Representative: Urizar Anasagasti, Jesus Maria

(57) **Abstract**

A water control system for silent filling of toilet cisterns characterised in that the filling is carried out silently and safely. Starting with the feed valve open, the water arrives to the high security control valve through a joining piece and an automatic adapter of the water pressure and flow-rate parameters, the valve is opened by the force of the weight of the dynamic float and is closed in the direction of the water flow, filling an expansion chamber first and then silently filling the cistern through its output orifices until the pre-set level is reached at which the dynamic float should give a closing order to the control valve preventing the passage of water to the expansion chamber, thus concluding the filling of the cistern. Once emptied the cycle is repeated.

## Description

In recent times the citizens who live in large towns and cities are more sensitive to acoustic contamination they are subject to, and so their behaviour tends towards a greater respect for their environment using all the means within their power to avoid bothering other people.

At one time or another, we have all been responsible for producing acoustic contamination and we have felt guilty about it as the cause has been accidental. But there are other situations where we know that we are going to make some noise that we cannot avoid, for example, when we go to toilet and pull the chain. On pulling the chain there are two types of noise produced:
a) a muffled low frequency noise corresponding to discharge of the cistern lasting for a short period of time, which hardly bothers anyone.
b) another of higher frequency which lasts throughout the refill period which, due to its wavelength, is transmitted more easily throughout the building where the cistern is installed, bothering the persons occupying the building.

These phenomena which can occur at any time, produce an uncomfortable sensation in sensitive people who feel bad because others will be aware of their customs and because they know that they can affect the wellbeing of their neighbours, waking them up and keeping them awake with possible negative consequences.

The WATER CONTROL SYSTEM FOR SILENT FILLING OF TOILET CISTERNS has been developed to palliate these problems. It is a very quiet and safe system by which the noise is greatly attenuated, avoiding any bother to third parties.

The system consists of the following parts:
a) an automatic adapter for the pressure and water flow parameters which is installed after the feed valve and before the control valve.
b) a control valve which closes in the direction of water flow, those of the mains with the those of the system, located in the entrance mouth of the expansion chamber for feeding thereof.
c) a submerged expansion chamber with wide output orifices for filling the cistern, located at the bottom to obtain the maximum noise attenuation.
d) a dynamic float which is responsible for giving the open and close orders to the control valve, characterised in that these orders are given quickly.

### ADVANTAGES OF THE SYSTEM

The main features that we can attribute to the water control system installed in a toilet cistern are as follows:
a) it is completely silent, achieving a great noise attenuation or reduction in the decibels produced during the filling process of the cistern.
b) it is very safe, as the control valve closes in the direction of water flow and so is unaffected by pressure changes or failure.
c) it allows larger flow sections as the closing is guaranteed by the control valve.
d) the closing is quick, not progressive as is the case in current systems, thanks to the dynamic float which gives open and close orders quickly.
e) its cost and installation is similar to current cisterns, with no difficulty in the assembly.

### SYSTEM OPERATION

The water control system is generally assembled with THERMOPLASTIC materials in order to reduce ageing and to avoid accumulation of substances on the walls.

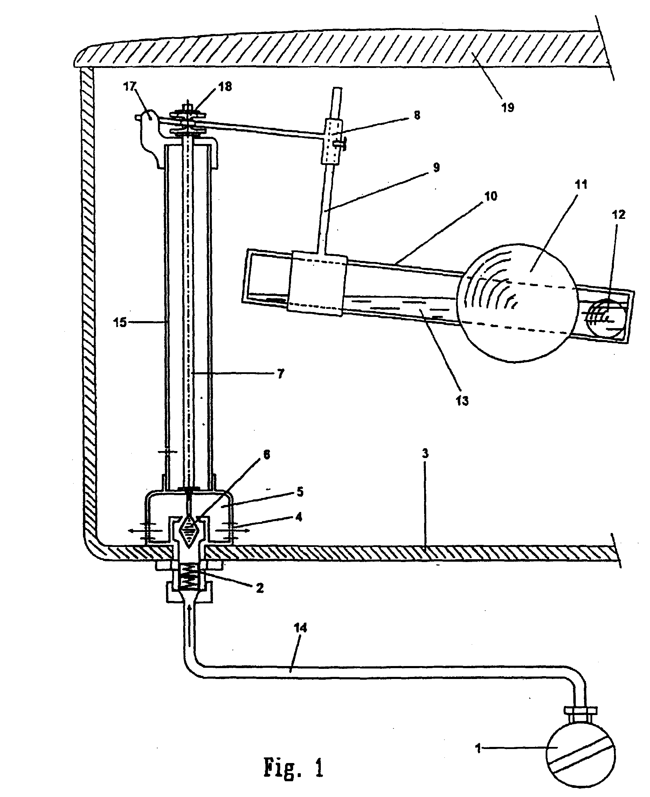

The operating principle (Figure 1) is as follows:

The developed water control system is fed by means of the feed valve (1), the water arriving to the entrance mouth and the automatic adapter for pressure and water flow parameters (2) which, once it has complied with its functions, has the effect that at his outflow:
1) within the acceptable parameters for the system to work well, there is a constant water flow with a reasonable filling time even with large entrance pressure differences.
2) there is a sufficient attenuation of the noises produced by the circulation of water during the filling of the cistern.
3) there is a better adaptation to the system parameters which guarantees that the desired objectives are achieved.

With suitable water parameters, the water arrives to the control valve (6) which, if it is open due to the force of the weight of the dynamic float (10), fills the expansion chamber (5) which, through its output orifices (4), starts to fill the cistern until reaching a pre-set level (8) so that on reaching this level the dynamic float (10) transmits the order to close the control valve (6), preventing more water from passing into the expansion chamber (5).

For the dynamic float (10) to transmit the order to close the control valve (6), the water in the cistern should reach the pre-set level (8) and has to push upwards, by the expanded polystyrene sphere which, combined with the force exerted on the control valve (6) by the water pressure, counteracts the downwards vertical push exerted by the weight of the float (10) with the water (13) and the lead sphere (12) inside it. When the float (10) arrives in the horizontal position, the water (13) and the lead sphere (12) are displaced towards a support point (17) giving rise to:
a) a displacement in the same direction of the centre of gravity of the float (10),
b) a considerable reduction in the downwards vertical push through reduction of the distance with respect to the support point,
c) and therefore, a strong upwards push of the float (10) which is longitudinally transmitted to the tickler (7) which supports the control valve by means of a rigid element (9) supported by the head (17) of the cylindrical structure (15) and a mechanism (18), see attached drawing, closing the passage of water to the expansion chamber.

## Claims

1. A water control system for silent filling of toilet cisterns, characterised in that it comprises:
a) an automatic adapter for the pressure and water flow parameters of the water mains to adapt them to the acceptable working values of the filling control system, being located after the feed valve and before the control valve, and with the possibility of being integrated in the entrance mouth of the water control system.
b) a control valve which closes in the direction of water flow, located in the entrance mouth of the expansion chamber for filling thereof.
c) a submerged expansion chamber comprising output orifices in its lowest part for the filling process, with a strategic location at the bottom of the cistern, in the water entrance mouth, to obtain the maximum noise attenuation from the start of filling.
d) a dynamic float consisting of an elongated cavity in which there is a free mass which moves along the cavity depending on the inclination thereof, a very low density material is attached to the elongated cavity, and a rigid joining element connects it with the point of support, the whole set being installed inside the cistern and creating a sudden movement when the pre-set level of filling is reached, which is transmitted to the control valve to close the feed to the cistern.

2. A water control system for silent filling of toilet cisterns according to the previous claim, characterised in that it is provided with an automatic adapter for the pressure and water flow parameters of the water mains, which comprises:
a) elastic sheets proportionally obstructing the passage of water to the input pressure, adapting the input parameters to the working values of the system.
b) a strategic location after the feed valve in the circuit that feeds the cistern and before the control valve, with the possibility of being integrated into the entrance mouth of the water control system.
c) features that allow it to automatically adapt the pressure and flow-rate of the water mains to acceptable working values for the filling control system in order to obtain the maximum attenuation of noises caused by the circulation of liquid during filling.

3. A water control system for silent filling of toilet cisterns according to the first claim, characterised in that it is provided with a water control valve comprising:
a) a feature such that it closes in the direction of water flow, offering high security against pressure variations or failure.
b) larger cut-off flow sections as the opening and closing is guaranteed by the control valve.
c) a geometric shape similar to that of two opposing cones of elastic material, that guarantees closure and in a strategic location in the entrance mouth of the expansion chamber.
d) a tickler connecting with the dynamic float by means of a mechanism for receiving orders in longitudinal sense.

4. A water control system for silent filling of toilet cisterns according to the first claim, characterised in that it is provided with an expansion chamber comprising:
a) a large cavity with respect to the water feeding conduit, and some large drainage orifices in its lowest parts so that the output to the exterior is silent,
b) different volumetric forms, toroidal, spherical, cylindrical, a combination of the two, etc., so that the adaptation to each cistern is optimised in terms of maximum attenuation of noise produced by the passage of water at the entrance and exit of the expansion chamber.
c) a strategic location at the bottom of the cistern, in the same water entrance duct mouth to obtain maximum attenuation of noise by the mass of water accumulated from the beginning of the filling.

5. A water control system for silent filling of toilet cisterns according to the first claim, characterised in that it is provided with an element denominated a dynamic float which comprises:
a) an elongated cavity or cylindrical tube which contains within it, occupying part of its volume, a heavy free mass, liquid, solid in the shape of a sphere, or both, constituting an horizontal axis to which another mass is attached, if necessary, of a very low density material, of different shapes and generally spherical.
b) a rigid joint of the elongated cavity with the point of support to tilt and transmit its movement to the control valve installed at the entrance mouth of the expansion chamber by means of a mechanism and a tickler.
c) a feature that produces a sudden definitive movement on reaching the pre-set level by displacement of the centre of gravity when the mass pass from one end to the other of the elongated cavity when the level is reached, with the possibility of being used to directly activate a valve as in this case, or a contact for electric control automatism in general.
d) a global configuration which can have different shapes adapted in each case, conditioned so that the physical phenomenon which first produces the displacement of the centre of gravity, then the sudden movement transmitted to the axis for closure of the water entrance to the cistern can take place.
